# FASCICULE DE BREVET EUROPEEN

(11) **EP 4 616 505 B1**
(45) Date de publication et mention de la délivrance du brevet: **02.12.2026**
(21) Numéro de dépôt: 23793400.5
(22) Date de dépôt: 24.10.2023
(51) Int. Cl.: H02J 1/00, H02J 1/10, H02J 3/38

(54) **SYSTÈME DE GÉNÉRATION ÉLECTRIQUE POUR UN AÉRONEF ET PROCÉDÉ ASSOCIÉ**
STROMERZEUGUNGSSYSTEM FÜR EIN FLUGZEUG UND ZUGEHÖRIGES VERFAHREN
ELECTRICAL GENERATION SYSTEM FOR AIRCRAFT, AND ASSOCIATED METHOD

(30) Priorité: 08.11.2022 FR 2211603
(43) Date de publication de la demande: 17.09.2025
(73) Titulaire: SAFRAN, 75015 Paris (FR); Safran Electrical & Power, 31702 Blagnac (FR)
(72) Inventeur: BEGGIORA, Geoffrey, 77550 MOISSY-CRAMAYEL (FR); ROUGIER, Florent Jean-Arnaud, 77550 MOISSY-CRAMAYEL (FR); BIDAN, Guillaume François Daniel, 77550 MOISSY-CRAMAYEL (FR); LIENHARDT, Anne Marie, 77550 MOISSY-CRAMAYEL (FR)
(74) Mandataire: Argyma
(86) Numéro de dépôt international: PCT/EP2023/079627
(87) Numéro de publication internationale: WO 2024/099766

(56) Documents cités:
- US-A1- 2016 359 324
- US-A1- 2018 291 807
- US-A1- 2021 380 264
- US-B2- 11 078 850

## Description

### DOMAINE TECHNIQUE

La présente invention concerne un système de génération électrique pour un aéronef et, plus généralement, un système d'hybridation électrique pour un aéronef.

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'aéronefs mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des aéronefs. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des aéronefs.

Ces travaux de recherche et de développement soutenus portent notamment sur de nouvelles générations de moteurs d'aéronef hybrides thermiques et électriques. L'objectif de la Déposante est notamment de développer des aéronefs intégrant un système de génération électrique de forte puissance. Ceci permettrait d'augmenter la part des équipements électriques à bord afin de réduire la consommation de carburant.

En pratique, dans une turbomachine d'aéronef classique, il est connu d'intégrer un générateur électrique qui prélève de l'énergie mécanique sur l'arbre basse pression de la turbomachine d'aéronef pour produire de l'énergie électrique qui est distribuée à une unité de distribution d'énergie électrique.

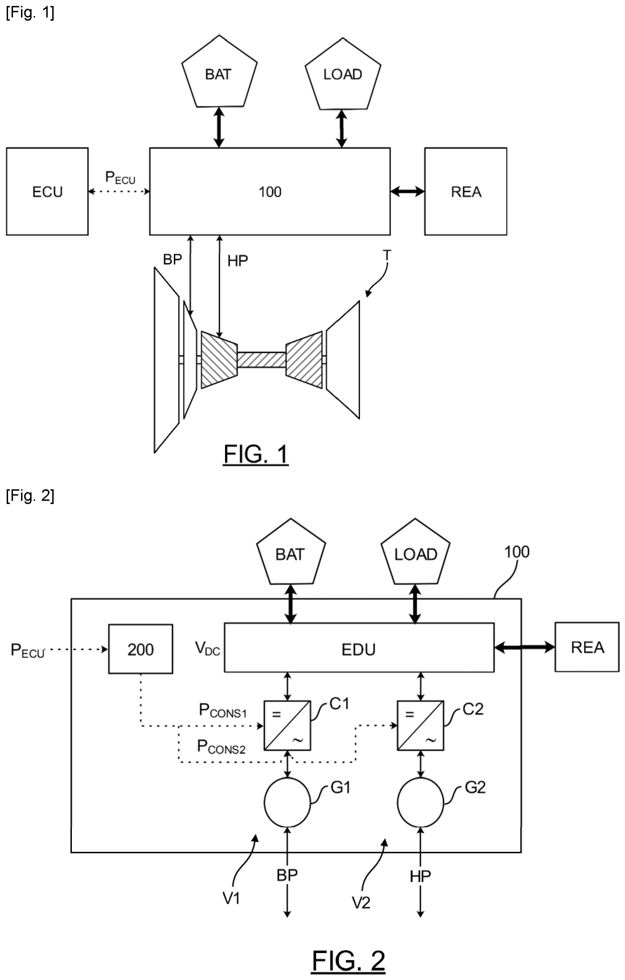

Pour augmenter la génération d'énergie électrique, en référence à la figure 1, il a été proposé un système de génération électrique 100 configuré pour prélever, d'une part, de l'énergie mécanique sur un arbre basse pression BP et, d'autre part, de l'énergie mécanique sur un arbre haute pression HP d'une turbomachine d'aéronef T pour alimenter un réseau électrique de l'aéronef REA avec une tension de distribution calibrée. Autrement dit, le système de génération électrique 100 comporte au moins deux voies d'alimentation, ici, une voie BP et une voie HP. Le système de génération électrique 100 peut être par ailleurs relié à des sources électriques BAT ou des charges électriques LOAD.

En pratique, le système de génération électrique 100 est configuré pour recevoir une consigne de génération P_{EGU} issue d'un calculateur ECU de la turbomachine T. Cette consigne de génération P_{EGU} permet de déterminer, par exemple, la quantité de puissance électrique à générer, le prélèvement mécanique sur chaque arbre, etc. Autrement dit, la consigne de génération P_{EGU} permet de déterminer la stratégie d'hybridation retenue.

En référence à la figure 2, le système de génération électrique 100 comporte deux génératrices G1, G2 reliées respectivement à l'arbre basse pression BP et à l'arbre haute pression HP de la turbomachine T. Le système de génération électrique 100 comporte en outre deux convertisseurs C1, C2, en particulier des onduleurs, qui sont respectivement associés aux deux génératrices G1, G2. Chaque génératrice G1, G2 génère un courant alternatif qui est ensuite redressé par son convertisseur C1, C2 pour fournir une tension de distribution V_{DC} à une unité de distribution électrique EDU qui est reliée électriquement au réseau électrique de l'aéronef REA, aux sources électriques BAT ou aux charges électriques LOAD.

Il est présenté dans cet exemple une application liée à la génération électrique mais l'invention s'applique plus généralement au domaine de l'hybridation dans lequel une machine électrique remplit, d'une part, une fonction de générateur pour prélever de la puissance mécanique sur l'arbre basse pression BP ou sur l'arbre haute pression HP et, d'autre part, une fonction de moteur pour injecter de la puissance mécanique sur l'arbre basse pression BP ou sur l'arbre haute pression HP. Pour une fonction moteur, chaque convertisseur C1, C2 peut également convertir la tension continue V_{DC} pour alimenter en courant alternatif respectivement les deux machines électriques G1, G2 afin d'injecter de la puissance.

Par souci de clarté et de concision, il n'est présenté que la fonction génératrice. Pour une fonction moteur, le calculateur ECU fournit une consigne d'injection P_{EGU} permettant de déterminer, par exemple, l'injection de puissance mécanique sur chaque arbre, etc. Le système d'hybridation est bidirectionnel pour permettre la génération de puissance électrique mais également l'injection de puissance mécanique.

De manière connue, chaque convertisseur C1, C2 comporte une pluralité d'interrupteurs, en particulier des transistors de puissance, qui permettent de modifier la puissance électrique générée et la puissance électrique prélevée par chaque génératrice G1, G2 sur chaque arbre BP, HP. Le système de génération électrique 100 comporte un dispositif de contrôle 200 pour émettre des consignes de paramétrage P_{CONS1}, P_{CONS2} à chaque convertisseur C1, C2 en fonction de la consigne de génération P_{ECU} de manière à obtenir une tension de distribution V_{DC} qui soit adaptée à l'unité de distribution électrique EDU.

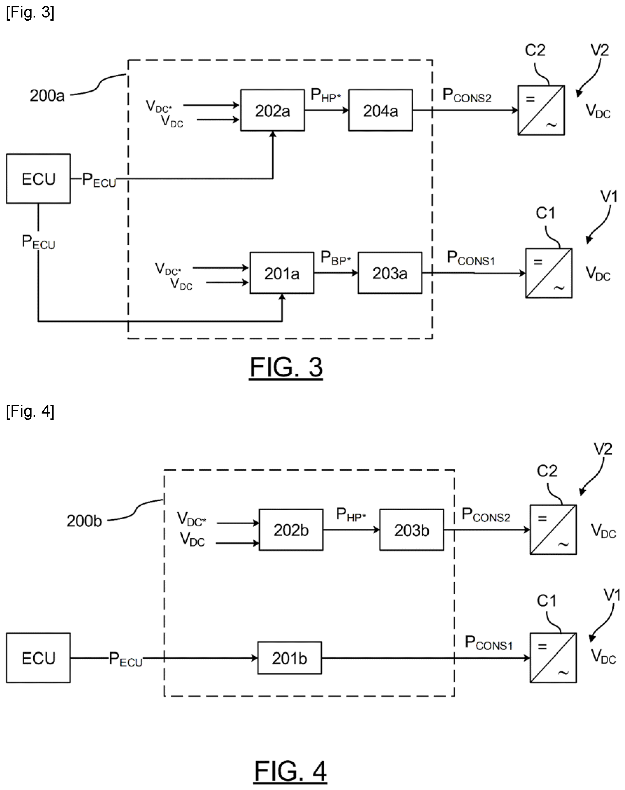

Dans l'art antérieur, en référence aux figures 3 à 5, on connaît plusieurs dispositifs de contrôle 200a, 200b, 200c pour fournir les consignes de paramétrage P_{CONS1}, P_{CONS2} aux convertisseurs C1, C2 de chaque voie d'alimentation V1, V2.

En référence à la figure 3, il est connu un dispositif de contrôle 200a comprenant une première unité de régulation 201a et une deuxième unité de régulation 202a qui fournissent respectivement des consignes de puissance P_{BP*}, P_{HP*} à une première unité de traitement 203a et à une deuxième unité de traitement 204a en fonction de la consigne de génération P_{ECU}. Ainsi, chaque unité de régulation 201a, 202a permet de mettre en œuvre de manière indépendant la stratégie d'hybridation déterminée par la consigne de génération P_{ECU}. La première unité de traitement 203a et la deuxième unité de traitement 204a fournissent respectivement les consignes de paramétrage P_{CONS1}, P_{CONS2} au premier convertisseur C1 et au deuxième convertisseur C2 à partir des consignes de puissance P_{BP*}, P_{HP*}. Dans cet exemple, chaque unité de régulation 201a, 202a réalise une régulation indépendante pour chaque convertisseur C1, C2 en comparant la tension de distribution V_{DC} à une consigne de tension de distribution V_{DC*} tout en tenant compte de la consigne de génération P_{ECU}. Dans cet exemple, les voies d'alimentation V1, V2 sont symétriques.

Bien que cette architecture « décentralisée » soit simple et robuste, elle présente l'inconvénient d'engendrer une erreur statique non nulle. Ainsi, la tension de distribution V_{DC} fournie à l'unité de distribution électrique EDU dépend du niveau de charge de l'unité de distribution électrique EDU, ce qui nécessite des gabarits qui couvrent une large plage de variation. Cela augmente le coût et la complexité de l'unité de distribution électrique EDU. En outre, une telle régulation est très dépendante de la mesure de la tension de distribution V_{DC}, ce qui impose une grande précision de la chaine d'acquisition de la mesure de la tension de distribution V_{DC}. Cela augmente encore le coût et la complexité.

En référence à la figure 4, il est également connu un dispositif de contrôle 200b comprenant une unité de partage 201b qui fournit une première consigne de paramétrage P_{CONS1} au premier convertisseur C1 en fonction de la consigne de génération P_{ECU}. De manière analogue à la figure 3, le dispositif de contrôle 200b comporte une unité de régulation 202b et une unité de traitement 203b. L'unité de régulation 202b réalise une régulation indépendante en comparant une mesure de la tension de distribution V_{DC} à une consigne de tension de distribution V_{DC*} pour fournir une consigne de puissance P_{HP*}. L'unité de traitement 203b fournit la consigne de paramétrage P_{CONS2} au deuxième convertisseur C2 en fonction de la consigne de puissance P_{HP*}. Dans cet exemple, les voies d'alimentation V1, V2 sont asymétriques.

Cette autre architecture « décentralisée » présente l'avantage d'assurer une indépendance entre, d'une part, l'unité de partage 201b et, d'autre part, l'unité de régulation 202b et l'unité de traitement 203b. Néanmoins, une telle architecture est peu robuste en cas de perte de l'unité de régulation 202b et/ou de l'unité de traitement 203b.L'unité de partage 201b peut se reconfigurer sur un temps « électriquement » long, qui peut engendrer une coupure partielle de l'alimentation. En outre, l'unité de partage 201b doit recevoir en permanence une consigne de génération P_{ECU} pour pouvoir fonctionner.

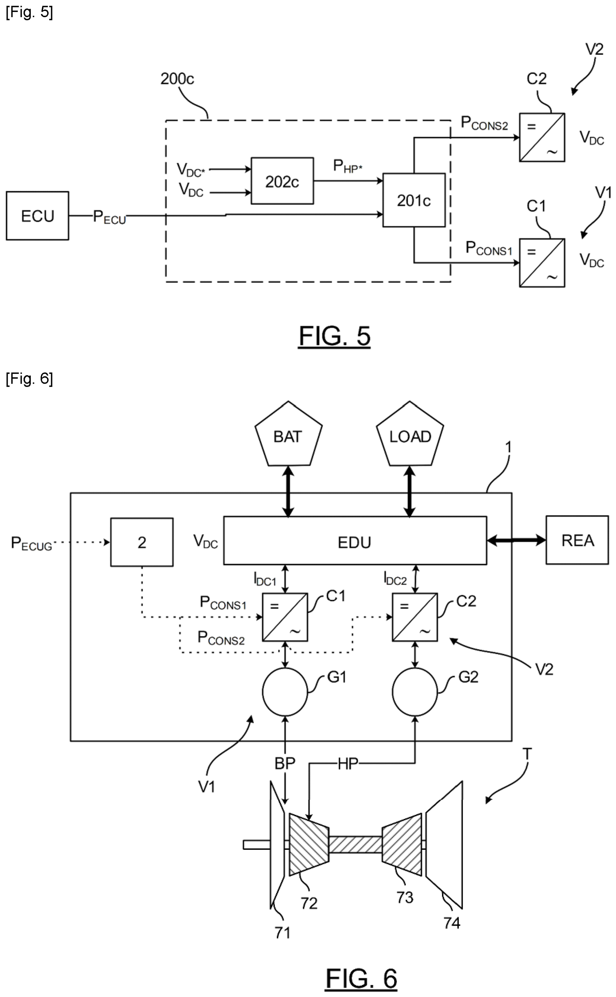

En référence à la figure 5, il est également connu un dispositif de contrôle 200c comprenant une unité de régulation 202c qui compare une mesure de la tension de distribution V_{DC} à une consigne de tension de distribution V_{DC*} pour fournir une consigne de puissance P_{HP*}. Le dispositif de contrôle 200c comprend une unité de partage 201c qui fournit les consignes de paramétrage P_{CONS1}, P_{CONS2} aux convertisseurs C1, C2 en fonction de la consigne de génération P_{ECU} et de la consigne de puissance P_{HP*}. Dans cet exemple, les voies d'alimentation V1, V2 sont symétriques.

Cette architecture « centralisée » présente l'avantage d'être robuste en cas de perte de l'unité de régulation 202c ou de fonctionnement partiel de l'unité de partage 201c. Une telle architecture présente l'inconvénient de nécessiter une communication rapide, supérieure à 10kHz, entre l'unité de régulation 202c et l'unité de partage 201c pour transmettre la consigne de puissance P_{HP*}. Pour atteindre ce but, il est nécessaire de prévoir une unité de calcul dédiée pour assurer la transmission de la consigne de puissance P_{HP*} entre l'unité de régulation 202c (côté génération HP) et l'unité de partage 201c (côté génération BP), ce qui augmente les besoins en calcul et augmente le coût.

L'invention vise à proposer un système de génération électrique qui élimine au moins certains de ces inconvénients.

US20180291807A1 et US2021380264A1 enseignent un système et une méthode pour allouer de la puissance électrique à un aéronef.

### PRESENTATION DE L'INVENTION

L'invention concerne un système de génération électrique selon la revendication 1.

De manière avantageuse, la deuxième cible de puissance correspond à une cible de puissance qui permet de respecter la stratégie d'hybridation. La première cible de puissance est déterminée par la régulation de tension et correspond à une cible de secours lorsque la stratégie d'hybridation ne peut plus être respectée. De manière avantageuse, la deuxième cible de puissance peut être transmise par une ligne de communication lente, la première cible de puissance pouvant prendre le relais de manière réactive en cas de dysfonctionnement. Le bloc de commande permet avantageusement de réaliser un contrôle en puissance pour une des voies d'alimentation qui est adapté de manière dynamique en cas de dysfonctionnement de l'autre voie d'alimentation.

Il n'est par ailleurs pas nécessaire de disposer de ligne de communication rapide, les voies d'alimentation pouvant se reconfigurer à la volée.

De préférence, l'unité de sélection est configurée pour, si la première consigne de génération est une instruction de tension sélectionner la première cible de puissance comme première consigne de puissance. Un contrôle en tension, plus sécurisé, est ainsi accepté en cas de demande. Seul un contrôle en puissance peut être modifié en cas de fonctionnement dégradé.

Selon un aspect, le système de génération électrique comprend au moins une unité de distribution électrique alimentée par les convertisseurs à la tension de distribution. L'unité de distribution se présente de préférence sous la forme d'un bus.

Selon un aspect, le bloc de commande appartient également à l'unité de distribution électrique. Les ressources de calcul de l'unité de distribution sont alors mutualisées.

De manière préférée, la première voie de contrôle et la deuxième voie de contrôle possèdent des unités analogues. Cela permet de réaliser un contrôle décentralisé.

Selon un aspect, le système de génération électrique comprend :
- Au moins une troisième voie d'alimentation comprenant un troisième convertisseur, alimenté par une troisième source électrique, pour générer une troisième intensité de distribution en fonction de son paramétrage, le troisième convertisseur générant une troisième puissance qui est fonction de la tension de distribution,
- Le dispositif de contrôle étant configuré pour déterminer une troisième consigne de paramétrage pour le troisième convertisseur, le dispositif de contrôle comprenant une troisième voie de contrôle pour contrôler la troisième voie d'alimentation,
- Le bloc de commande étant configuré, à partir de la consigne générale de génération, pour fournir une troisième consigne de génération à la troisième voie d'alimentation, une unique consigne de génération étant une instruction de tension, les autres étant des instructions de puissance.

Le système de génération électrique est ainsi échelonnable à plus de deux voies d'alimentation afin de mettre en œuvre des stratégies d'hybridation complexes.

Selon un aspect, l'unité de sélection de la première voie de contrôle est configurée pour :
- Si la première consigne de génération est une instruction de puissance, sélectionner par défaut la deuxième cible de puissance comme première consigne de puissance et pour sélectionner la première cible de puissance comme première consigne de puissance en cas de dysfonctionnement de la deuxième voie d'alimentation ou de la troisième voie d'alimentation.

Ainsi, la première voie d'alimentation tient compte de l'état de fonctionnement des autres voies d'alimentation avant d'appliquer une instruction de puissance, ce qui améliore la fiabilité.

De manière préférée, chaque génératrice se présente sous la forme d'une machine électrique configurée pour injecter de l'énergie mécanique sur un des arbres basse pression et haute pression (fonction moteur). Le convertisseur, associé à la génératrice, est un convertisseur bidirectionnel.

L'invention concerne également un procédé de génération électrique pour alimenter au moins un réseau électrique d'un aéronef à partir d'un système de génération électrique tel que présenté précédemment, l'aéronef comprenant au moins une turbomachine d'aéronef comprenant un arbre basse pression et un arbre haute pression configurés pour être entraînés en rotation, le procédé comportant des étapes consistant à :
- Recevoir une consigne de génération générale définissant une stratégie d'hybridation,
- A partir de la consigne générale de génération, fournir une première consigne de génération à la première voie d'alimentation et une deuxième consigne de génération à la deuxième voie d'alimentation, l'une de la première consigne de génération et de la deuxième consigne de génération étant une instruction de tension, l'autre étant une instruction de puissance,

- Déterminer une première cible de puissance en fonction d'une consigne de tension de distribution et d'une mesure de la tension de distribution,
- Déterminer une deuxième cible de puissance à partir de la première consigne de génération,
- Sélectionner par défaut la deuxième cible de puissance comme première consigne de puissance et sélectionner la première cible de puissance comme première consigne de puissance en cas de dysfonctionnement de la deuxième voie d'alimentation,
- Déterminer une première consigne de paramétrage pour le premier convertisseur à partir de la première consigne de puissance.

L'invention concerne également un produit de type programme d'ordinateur, comprenant au moins une séquence d'instructions stockée et lisible par un processeur et qui, une fois lue par ce processeur, provoque la réalisation des étapes du procédé tel que présenté précédemment.

L'invention concerne en outre un support lisible par un ordinateur comportant le produit de type programme d'ordinateur tel que présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un système de génération électrique prélevant de l'énergie mécanique sur une turbomachine d'aéronef.
La figure 2 est une représentation schématique du système de génération électrique avec ses génératrices, ses convertisseurs, une unité de distribution électrique et un dispositif de contrôle.
La figure 3 est une représentation schématique d'une première forme de réalisation d'un dispositif de contrôle selon l'art antérieur.
La figure 4 est une représentation schématique d'une deuxième forme de réalisation d'un dispositif de contrôle selon l'art antérieur.
La figure 5 est une représentation schématique d'une troisième forme de réalisation d'un dispositif de contrôle selon l'art antérieur.
La figure 6 est une représentation schématique d'un système de génération électrique selon l'invention.
La figure 7 est une représentation schématique du dispositif de contrôle du système de génération.
La figure 8 est une représentation schématique détaillée d'une unité de régulation du dispositif de contrôle.
La figure 9 est une représentation schématique du fonctionnement de l'unité de sélection de la première voie de contrôle.
La figure 10 est une représentation schématique d'une autre forme de réalisation du système de génération avec une troisième voie d'alimentation.
La figure 11 est une représentation schématique d'une autre forme de réalisation du système de génération.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 6, il est représenté un système de génération électrique 1 pour un aéronef. L'aéronef comprend une turbomachine T comprenant un arbre basse pression BP et un arbre haute pression HP. Dans cet exemple, la turbomachine T comporte un compresseur basse pression 71 et une turbine basse pression 74 qui sont reliées par l'arbre basse pression BP et un compresseur haute pression 72 et une turbine haute pression 73 qui sont reliées par l'arbre haute pression HP.

Le système de génération électrique 1 est configuré pour prélever, d'une part, de l'énergie mécanique sur l'arbre basse pression BP et, d'autre part, de l'énergie mécanique sur l'arbre haute pression HP pour alimenter un réseau électrique de l'aéronef REA avec une tension calibrée. Le système de génération électrique 1 peut être par ailleurs relié à des sources électriques BAT ou des équipements électriques à alimenter LOAD.

**En** pratique, comme cela sera présenté par la suite, le système de génération électrique permet plus généralement une hybridation électrique pour permettre de prélever ou d'injecter de la puissance à la turbomachine T.

Le système de génération électrique 1 est configuré pour recevoir une consigne générale de génération P_{ECUG} issue d'un calculateur ECU de la turbomachine T. Cette consigne générale de génération P_{ECUG} permet de déterminer, par exemple, la quantité de puissance électrique à générer, le prélèvement mécanique sur chaque arbre, etc. Autrement dit, la consigne générale de génération P_{ECUG} permet de déterminer la stratégie d'hybridation retenue. **En** pratique, la consigne générale de génération P_{ECUG} se présente sous la forme d'une consigne de puissance dite « Setpoint PS » ou d'une consigne de partage de puissance dite « Mode PS ».

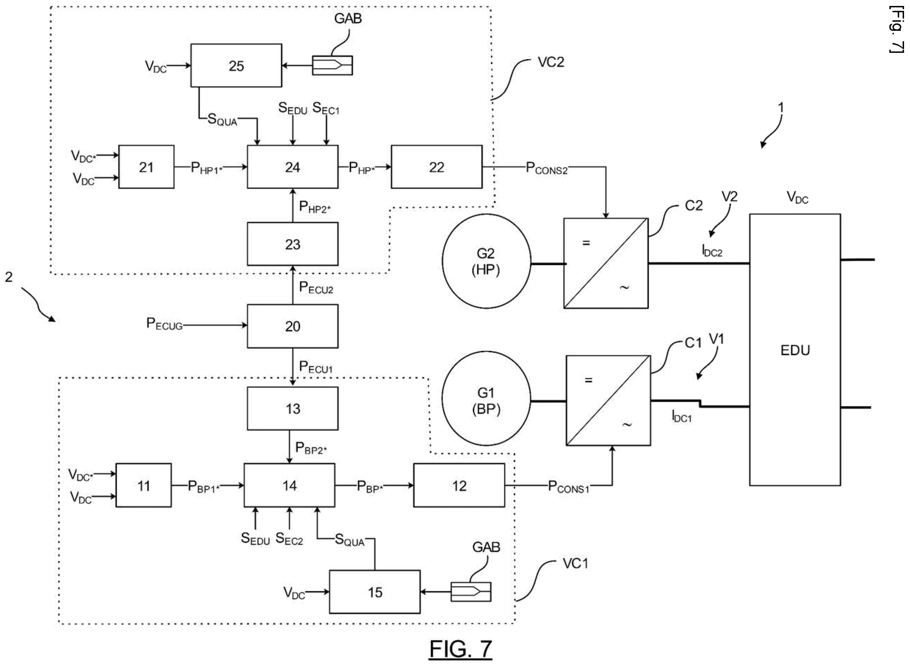

**En** référence aux figures 6 et 7, le système de génération électrique 1 comporte deux génératrices G1, G2 reliées respectivement à l'arbre basse pression BP et à l'arbre haute pression HP de la turbomachine T. Le système de génération électrique 1 comporte :
- Une première voie d'alimentation V1 comprenant :
   - Une première génératrice G1 configurée pour générer un courant alternatif en prélevant de l'énergie mécanique sur l'arbre basse pression BP,
   - Un premier convertisseur C1, associé à la première génératrice G1, pour convertir le courant alternatif généré en une première intensité de distribution I_{DC1} en fonction de son paramétrage, le premier convertisseur C1 générant une première puissance P_{BP} qui est fonction d'une tension de distribution V_{DC},
- Une deuxième voie d'alimentation V2 comprenant:
   - Une deuxième génératrice G2 configurée pour générer un courant alternatif en prélevant de l'énergie mécanique sur l'arbre haute pression HP,
   - Un deuxième convertisseur C2, associé à la deuxième génératrice G2, pour convertir le courant alternatif généré en une deuxième intensité de distribution I_{DC2} en fonction de son paramétrage, le deuxième convertisseur C2 générant une deuxième puissance P_{HP} qui est fonction de la tension de distribution V_{DC}.

Dans cet exemple, la première voie d'alimentation V1 est associée à un prélèvement de puissance sur un arbre basse pression BP tandis que la deuxième voie d'alimentation V2 est associée à un prélèvement de puissance sur un arbre haute pression HP. Il va de soi que l'inverse est également possible.

Dans cet exemple, les génératrices G1, G2 sont de préférence des machines électriques capables de fonctionner selon un mode générateur un ou mode moteur. De manière connue, chaque machine électrique comporte un rotor solidaire d'un arbre tournant (ici un arbre BP ou un arbre HP) et un stator comportant des enroulements de manière à générer des courants alternatifs triphasés. De manière préférée, la vitesse w et la position angulaire θ de chaque génératrice G1, G2 sont disponibles. La structure et le fonctionnement d'une telle machine électrique sont connus et ne seront pas présentés plus en détails.

En référence à la figure 6, le système de génération électrique 1 comporte une unité de distribution électrique EDU qui est reliée électriquement au réseau électrique de l'aéronef REA, aux sources électriques BAT ou aux charges électriques LOAD.

Chaque convertisseur C1, C2 peut fournir une tension de distribution V_{DC} à l'unité de distribution électrique EDU. De préférence, l'unité de distribution électrique EDU comporte un bus de tension.

De manière connue, chaque convertisseur C1, C2 comporte une pluralité d'interrupteurs, en particulier des transistors, qui permettent de modifier la puissance électrique générée et la puissance mécanique prélevée sur chaque arbre BP, HP pour adapter l'intensité de distribution I_{DC1}, I_{DC2} en fonction des besoins.

Selon l'invention, en référence à la figure 6, le système de génération électrique 1 comporte un dispositif de contrôle 2 configuré pour déterminer une première consigne de paramétrage P_{CONS1} pour le premier convertisseur C1 et une deuxième consigne de paramétrage P_{CONS2} pour le deuxième convertisseur C2.

De manière préférée, chaque consigne de paramétrage P_{CONS1}, P_{CONS2} se présente sous la forme d'un signal de modulation de largeur d'impulsion (MLI). Une telle consigne de paramétrage P_{CONS1}, P_{CONS2} permet de commander la commutation des transistors des convertisseurs C1, C2.

En référence à la figure 7, le dispositif de contrôle 2 comporte un bloc de commande 20 configuré, à partir de la consigne générale de génération P_{ECUG}, pour fournir une première consigne de génération P_{ECU1} à la première voie d'alimentation V1 et une deuxième consigne de génération P_{ECU2} à la deuxième voie d'alimentation V2. Selon l'invention, l'une de la première consigne de génération P_{ECU1} et de la deuxième consigne de génération P_{ECU2} est une instruction de tension InsV tandis que l'autre est une instruction de puissance InsP. Une instruction de puissance InsP vise à respecter un critère de fourniture ou de prélèvement de puissance par une voie d'alimentation V1, V2 (consigne de puissance, partage de puissance, etc.) tandis qu'une instruction de tension InsV vise à assurer une simple régulation de tension sans objectif d'hybridation.

De manière avantageuse, les consignes de génération P_{ECU1}, P_{ECU2} sont de natures différentes afin de contrôler les voies d'alimentation V1, V2 de manière asymétrique tout en ayant un dispositif de contrôle 2 qui comporte des voies de contrôle VC1, VC2 qui sont analogues comme cela sera présenté par la suite.

Ainsi, en fonction des situations au cours du temps, le type d'instruction fourni à chacune des voies d'alimentation V1, V2 peut évoluer suite à une modification de la consigne générale de génération P_{ECUG}, les consignes de génération P_{ECU1}, P_{ECU2} demeurant de natures différentes.

En référence à la figure 7, le dispositif de contrôle 2 comporte, pour la première voie d'alimentation V1, une première voie de contrôle VC1 qui comprend une unité de régulation 11 configurée pour déterminer une première cible de puissance P_{BP1*} en fonction d'une consigne de tension de distribution V_{DC*} et d'une mesure de la tension de distribution V_{DC}. Selon un aspect de l'invention, la première unité de régulation 11 met en œuvre une boucle de régulation avec une erreur statique nulle à l'aide d'un correcteur, par exemple, du type proportionnel-intégral PI, afin de déterminer une première cible de puissance P_{BP1*} en fonction de la consigne de tension de distribution V_{DC*} et de la mesure de la tension de distribution V_{DC}. En pratique, la première cible de puissance P_{BP1*} est déterminée de manière analogue à l'art antérieur.

Toujours en référence à la figure 7, la première voie de contrôle VC1 comprend une unité d'hybridation 13 configurée pour déterminer une deuxième cible de puissance P_{BP2*} à partir de la première consigne de génération P_{ECU1}. De manière préférée, l'unité d'hybridation 13 permet de déterminer une cible alternative à la première cible de puissance P_{BP1*}.

En pratique, l'unité d'hybridation 13 détermine la deuxième cible de puissance P_{BP2} en fonction de la nature de la consigne P_{ECU1} qui peut être directement la consigne de puissance cible à appliquer ou une formule dépendant de P_{ECU1} en fonction de la stratégie d'hybridation.

La deuxième cible de puissance P_{BP2}* correspond à une cible de puissance qui permet de respecter la stratégie d'hybridation. La première cible de puissance P_{BP1*} est déterminée par la régulation de tension et correspond à une cible de secours en cas de dysfonctionnement comme cela sera détaillé par la suite.

La première voie de contrôle VC1 comprend une unité de sélection 14 configurée pour :
- si la première consigne de génération P_{ECU1} est une instruction de tension InsV, sélectionner la première cible de puissance P_{BP1*} comme première consigne de puissance P_{BP*},
- si la première consigne de génération P_{ECU1} est une instruction de puissance InsP, sélectionner par défaut la deuxième cible de puissance P_{BP2*} comme première consigne de puissance P_{BP*} et pour sélectionner la première cible de puissance P_{BP1*} comme première consigne de puissance P_{BP*} en cas de dysfonctionnement de la deuxième voie d'alimentation V2.

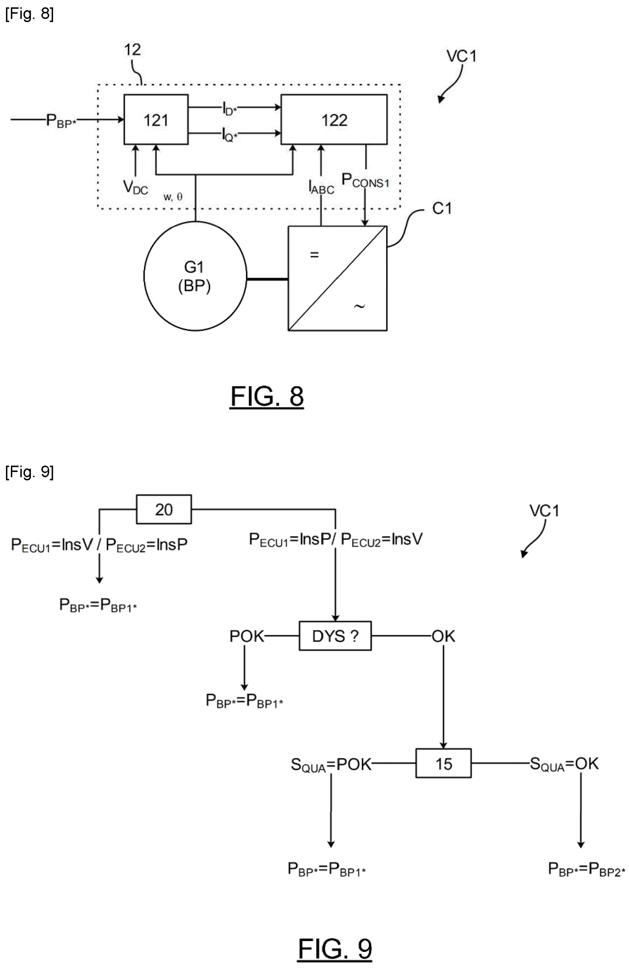

Un exemple de mise en œuvre d'une sélection d'une cible de puissance dans la première voie de contrôle VC1 est présentée à la figure 9.

Tout d'abord, l'unité de sélection 14 est configurée pour tester l'instruction de la première consigne de génération P_{ECU1}. Si la première consigne de génération P_{ECU1} est une instruction de tension InsV, la première cible de puissance P_{BP1*} est sélectionnée comme première consigne de puissance P_{BP*}. Une instruction de tension InsV est intrinsèquement plus sécurisée qu'une instruction de puissance InsP et celle-ci peut être appliquée de manière sécurisée, même en cas de dysfonctionnement de l'autre voie d'alimentation V2.

Si la première consigne de génération P_{ECU1} est une instruction de puissance InsP, l'unité de sélection 14 est configurée pour tester la présence d'un dysfonctionnement de la deuxième voie d'alimentation V2, en particulier, en obtenant l'état de fonctionnement S_{EDU} de l'unité de distribution électrique EDU et l'état de fonctionnement S_{EC2} du deuxième convertisseur C2. De manière avantageuse, chaque état de fonctionnement S_{EDU}, S_{EC2} peut être transmis via des discrets (signal tout ou rien) afin de reconfigurer la première voie d'alimentation V1 sur une instruction de tension InsV qui est intrinsèquement plus sécurisée. Une transmission par discrets est rapide par comparaison à un bus.

La première cible de puissance P_{BP1*} est sélectionnée comme première consigne de puissance P_{BP*} en présence d'un dysfonctionnement de la deuxième voie d'alimentation V2 ou de perte des états de fonctionnement S_{EDU}, S_{C2}. Ainsi, cela permet d'obtenir une consigne de puissance sécurisée même en cas de dysfonctionnement. Ainsi, les deux voies d'alimentation V1, V2 peuvent alors réaliser un contrôle en tension.

La deuxième cible de puissance P_{BP2*} est sélectionnée comme première consigne de puissance P_{BP*} en l'absence de dysfonctionnement de la deuxième voie d'alimentation V2. Ainsi, cela permet d'obtenir une consigne de puissance qui permet une hybridation optimale.

En référence aux figures 7 et 9, de manière optionnelle, l'unité de sélection 14 est configurée pour utiliser la première cible de puissance P_{BP1*} en cas de détection d'un signal de non-qualité S_{QUA} de la tension de distribution V_{DC}. A cet effet, en référence à la figure 7, le dispositif de contrôle 2 comporte une unité de surveillance de distribution 15 configurée pour comparer la mesure de la tension de distribution V_{DC} dans le temps à un gabarit de tension GAB. De manière connue, un gabarit de tension GAB détermine la plage nominale de variation autorisée de la tension de distribution V_{DC} ainsi que des plages exceptionnelles de variation pendant lesquelles la tension de distribution V_{DC} peut sortir de la plage nominale de variation pendant une durée maximale autorisée. En cas de non-respect du gabarit de tension GAB par la mesure de la tension de distribution V_{DC}, un signal de non-qualité S_{QUA} est émis par l'unité de surveillance de distribution 15 pour utiliser la première cible de puissance P_{BP1*}. Ainsi, même si aucun dysfonctionnement de l'unité de distribution EDU n'a été détecté, l'unité de surveillance de distribution 15 peut activer la cible de secours si la tension de distribution V_{DC} est dégradée. Le dispositif de contrôle 2 est ainsi plus performant.

Dans cet exemple, l'unité de sélection 14 est configurée pour utiliser la première cible de puissance P_{BP1*} ou la deuxième cible de puissance P_{BP2*}. Sur le plan pratique, l'unité de sélection 14 peut également réaliser une sélection de la deuxième cible de puissance P_{BP2*} par réalisation d'une saturation de la première cible de puissance P_{BP1*} afin d'atteindre la deuxième cible de puissance P_{BP2*}.

Lorsque la deuxième cible de puissance P_{BP2*} est sélectionnée comme première consigne de puissance P_{BP*}, la première unité de régulation 11 met en œuvre une fonction d'anti-saturation de l'intégrale connue sous sa désignation anglaise « anti-windup » afin de ne pas altérer la consigne de puissance P_{BP1*}.

En référence à la figure 7, la première voie de contrôle VC1 comporte également une unité de traitement 12 configurée pour déterminer la première consigne de paramétrage P_{CONS1} pour le premier convertisseur C1 à partir de la première consigne de puissance P_{BP*}.

Selon un aspect, en référence à la figure 8, l'unité de traitement 12 comporte un premier bloc 121 mettant en œuvre un algorithme transformant la première consigne de puissance P_{BP*} en deux consignes de courants I_{D}*/I_{Q}* tout en tenant compte de la vitesse w et de la position angulaire θ de la première génératrice G1 et de la mesure de la tension de distribution V_{DC}. Toujours en référence à la figure 8, la première unité de traitement 12 comporte en outre un deuxième bloc 122 mettant en œuvre une boucle de courant configurée pour définir la première consigne de paramétrage P_{CONS1} du premier convertisseur C1 à partir d'une mesure des courants triphasés I_{ABC} dans le premier convertisseur C1 et des consignes de courants I_{D}*/I_{Q}* issus du premier bloc 121. Une telle unité de traitement 12 est connue de l'homme du métier et ne sera pas présentée plus en détails.

**En** référence à la figure 7, le dispositif de contrôle 2 comporte une deuxième voie de contrôle VC2 pour la deuxième voie d'alimentation V2 qui possède des unités analogues à la première voie de contrôle VC1. Aussi, par souci de clarté et de concision, les éléments propres à la deuxième voie d'alimentation V2 ne vont pas être décrits de nouveau en détails.

La deuxième voie de contrôle VC2 comporte ainsi une unité de régulation 21 configurée pour déterminer une première cible de puissance P_{HP1*} en fonction d'une consigne de tension de distribution V_{DC*} et d'une mesure de la tension de distribution V_{DC}.

La deuxième voie de contrôle VC2 comporte une unité d'hybridation 23 configurée pour déterminer une deuxième cible de puissance P_{HP2*} à partir de la deuxième consigne de génération P_{ECU2}.

La deuxième voie de contrôle VC2 comporte une unité de sélection 24 configurée pour :
- si la deuxième consigne de génération P_{ECU2} est une instruction de tension InsV, sélectionner la première cible de puissance P_{HP1*} comme deuxième consigne de puissance P_{HP*},
- si la deuxième consigne de génération P_{ECU2} est une instruction de puissance InsP, sélectionner par défaut la deuxième cible de puissance P_{HP2*} comme deuxième consigne de puissance P_{HP*} et pour sélectionner la première cible de puissance P_{HP1*} comme deuxième consigne de puissance P_{HP*} en cas de dysfonctionnement de la première voie d'alimentation V1, en particulier, en obtenant l'état de fonctionnement S_{EDU} de l'unité de distribution électrique **EDU** et l'état de fonctionnement S_{EC1} du premier convertisseur C1.

La deuxième voie de contrôle VC2 comporte une unité de traitement 22 configurée pour déterminer la deuxième consigne de paramétrage P_{CONS2} pour le deuxième convertisseur C2 à partir de la deuxième consigne de puissance P_{HP*}.

Le dispositif de contrôle 2 permet un contrôle décentralisé dans lequel la deuxième voie d'alimentation V2 est contrôlée de manière autonome, la deuxième voie d'alimentation V2 s'adaptant à l'état de fonctionnement de la première voie d'alimentation V1.

Dans cette forme de réalisation, de manière analogue à la première voie de contrôle VC1, la deuxième voie de contrôle VC2 comporte une unité de surveillance de distribution 25.

Il est présenté dans cet exemple une application liée à la génération électrique mais l'invention s'applique plus généralement au domaine de l'hybridation dans lequel une machine électrique remplit, d'une part, une fonction de générateur pour prélever de la puissance mécanique sur l'arbre basse pression BP ou sur l'arbre haute pression HP et, d'autre part, une fonction de moteur pour injecter de la puissance mécanique sur l'arbre basse pression BP ou sur l'arbre haute pression HP. Pour une fonction moteur, chaque convertisseur C1, C2 peut également convertir la tension continue V_{DC} pour alimenter en courant alternatif respectivement les deux machines électriques G1, G2 afin d'injecter de la puissance.

Par souci de clarté et de concision, il n'est présenté que la fonction génératrice. Pour une fonction moteur, le calculateur ECU fournit une consigne d'injection P_{ECU} permettant de déterminer, par exemple, l'injection de puissance mécanique sur chaque arbre, etc. Le système d'hybridation est bidirectionnel pour permettre la génération de puissance électrique mais également l'injection de puissance mécanique.

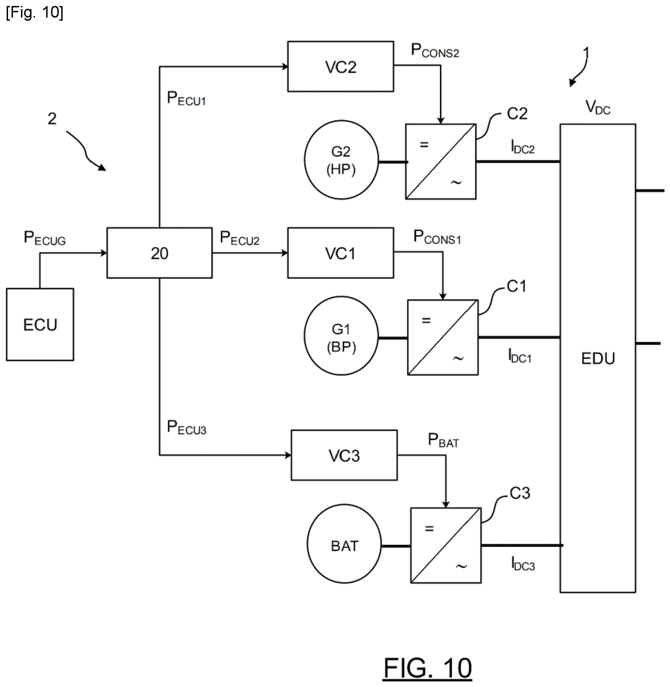

L'invention a été présentée pour un système de génération électrique 1 comprenant deux voies d'alimentation V1, V2 mais l'invention s'applique également en présence d'une ou plusieurs autres voies d'alimentation V3, en particulier une batterie électrique BAT, fournissant une troisième intensité de distribution I_{DC3} à l'unité de distribution électrique EDU comme illustré à la figure 10. Par souci de clarté, la deuxième voie d'alimentation V2 n'est pas représentée sur cette figure.

En référence à la figure 10, le système de génération électrique 1 comporte une batterie électrique BAT reliée électriquement à l'unité de distribution électrique EDU par un troisième convertisseur C3, ici du type continu/continu.

Le dispositif de contrôle 2 est configuré pour déterminer une troisième consigne de paramétrage P_{BAT} pour le troisième convertisseurs C3. A cet effet, le dispositif de contrôle 2 comporte une troisième voie de contrôle VC3 pour déterminer la troisième consigne de paramétrage P_{BAT} pour contrôler la troisième voie d'alimentation V3 en fonction de la consigne de génération P_{ECU}.

Dans cette forme de réalisation, en référence à la figure 10, le bloc de commande 20 est configuré, à partir de la consigne générale de génération P_{ECUG}, pour fournir en outre une troisième consigne de génération P_{ECU3} à la troisième voie d'alimentation V3. De manière préférée, une unique consigne de génération est une instruction de tension InsV, les autres étant des instructions de puissance InsP. Ainsi, la consigne générale de génération P_{ECUG} permet de traiter une hybridation avec plusieurs voies d'alimentation V1, V2, V3 en imposant une instruction de puissance InsP sur deux des voies d'alimentation, la dernière voie d'alimentation s'adaptant avec un contrôle en tension.

Selon un aspect, la première voie de contrôle VC1 est configurée pour, si la première consigne de génération P_{ECU1} est une instruction de puissance InsP, sélectionner par défaut la deuxième cible de puissance P_{BP2*} comme première consigne de puissance P_{BP*} et sélectionner la première cible de puissance P_{BP1*} comme première consigne de puissance P_{BP*} en cas de dysfonctionnement de la deuxième voie d'alimentation V2 ou de la troisième voie d'alimentation V3. La surveillance des dysfonctionnements est ainsi assurée pour toutes les autres voies d'alimentation.

Le dispositif de contrôle 2 est ainsi échelonnable et permet de prendre en compte plus de deux sources de puissance alimentant l'unité de distribution électrique EDU.

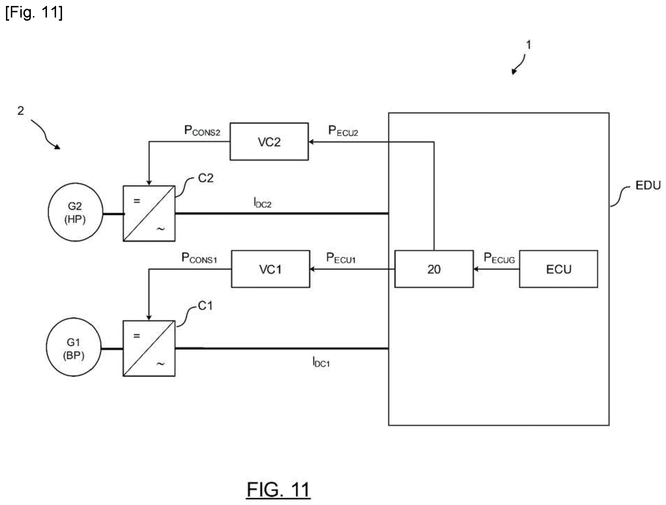

Dans la forme de réalisation de la figure 7, le bloc de commande 20 a été représenté schématiquement de manière indépendante de l'unité de distribution électrique EDU. De manière alternative, en référence à la figure 11, le bloc de commande 20 est intégré à l'unité de distribution électrique **EDU** de manière à optimiser les ressources de calcul. Cela permet avantageusement de former une unité de distribution électrique **EDU** remplissant sa fonction classique et fournissant en outre des consignes de génération sans recourir à des moyens de calculs additionnels que ceux de l'unité de distribution électrique EDU.

Le système de génération électrique 1 comprend une architecture décentralisée dans laquelle chaque voie de contrôle VC1, VC2 est analogue et peut prendre ses propres décisions en fonction d'éventuels dysfonctionnements et/ou de la qualité de la tension de distribution V_{DC}. Des reconfigurations du système de génération électrique 1 peuvent être réalisées à la volée lors de l'apparition/disparition de dysfonctionnements.

## Revendications

1. Système de génération électrique (1) pour alimenter au moins un réseau électrique d'un aéronef (REA), l'aéronef comprenant au moins une turbomachine d'aéronef (T) comprenant un arbre basse pression (BP) et un arbre haute pression (HP) configurés pour être entraînés en rotation, le système de génération électrique (1) étant configuré pour recevoir une consigne générale de génération (P_{ECUG}) définissant une stratégie d'hybridation, le système de génération électrique (1) comprenant :
- Une première voie d'alimentation (V1) comprenant :
- Une première génératrice (G1) configurée pour générer un courant alternatif en prélevant de l'énergie mécanique sur un des arbres basse pression (BP) et haute pression (HP),
- Un premier convertisseur (C1), associé à la première génératrice (G1), pour convertir le courant alternatif généré en une première intensité de distribution (I_{DC1}) en fonction de son paramétrage, le premier convertisseur (C1) générant une première puissance (P_{BP}) qui est fonction d'une tension de distribution (V_{DC}),
- Une deuxième voie d'alimentation (V2) comprenant :
- Une deuxième génératrice (G2) configurée pour générer un courant alternatif en prélevant de l'énergie mécanique sur l'autre des arbres basse pression (BP) et haute pression (HP),
- Un deuxième convertisseur (C2), associé à la deuxième génératrice (G2), pour convertir le courant alternatif généré en une deuxième intensité de distribution (I_{DC2}) en fonction de son paramétrage, le deuxième convertisseur (C2) générant une deuxième puissance (P_{HP}) qui est fonction de la tension de distribution (V_{DC}),
- Un dispositif de contrôle (2) configuré pour déterminer une première consigne de paramétrage (P_{CONS1}) pour le premier convertisseur (C1) et une deuxième consigne de paramétrage (P_{CONS2}) pour le deuxième convertisseur (C2), le dispositif de contrôle (2) étant **caractérisé en ce qu'**il comprend :
- Un bloc de commande (20) configuré, à partir de la consigne générale de génération (P_{ECUG}), pour fournir une première consigne de génération (P_{ECU1}) à la première voie d'alimentation (V1) et une deuxième consigne de génération (P_{ECU2}) à la deuxième voie d'alimentation (V2), l'une de la première consigne de génération (P_{ECU1}) et de la deuxième consigne de génération (P_{ECU2}) étant une instruction de tension (InsV), l'autre étant une instruction de puissance (InsP),
- Une première voie de contrôle (VC1) pour contrôler la première voie d'alimentation (V1) qui comprend :
∘ Une unité de régulation (11) configurée pour déterminer une première cible de puissance (P_{BP1*}) en fonction d'une consigne de tension de distribution (V_{DC*}) et d'une mesure de la tension de distribution (V_{DC}),
∘Une unité d'hybridation (13) configurée pour déterminer une deuxième cible de puissance (P_{BP2*}) à partir de la première consigne de génération (P_{ECU1}),
∘ Une unité de sélection (14) configurée pour, si la première consigne de génération (P_{ECU1}) est une instruction de puissance (InsP),
▪ Sélectionner par défaut la deuxième cible de puissance (P_{BP2*}) comme première consigne de puissance (P_{BP*}) et
▪ Sélectionner la première cible de puissance (P_{BP1*}) comme première consigne de puissance (P_{BP*}) en cas de dysfonctionnement de la deuxième voie d'alimentation (V2),
∘ Une unité de traitement (12) configurée pour déterminer la première consigne de paramétrage (P_{CONS1}) pour le premier convertisseur (C1) à partir de la première consigne de puissance (P_{BP*})
- une deuxième voie de contrôle (VC2) pour contrôler la deuxième voie d'alimentation (V2) comprenant :
∘ Une unité de régulation (21) configurée pour déterminer une première cible de puissance (P_{HP1*}) en fonction d'une consigne de tension de distribution (V_{DC*}) et d'une mesure de la tension de distribution (V_{DC}),
∘ Une unité d'hybridation (23) configurée pour déterminer une deuxième cible de puissance (P_{HP2*}) à partir de la deuxième consigne de génération (P_{ECU2}),
∘Une unité de sélection (24) configurée pour :
▪ Si la deuxième consigne de génération (P_{ECU2}) est une instruction de tension (InsV), sélectionner la première cible de puissance (P_{HP1*}) comme deuxième consigne de puissance (P_{HP*}),
▪ Si la deuxième consigne de génération (P_{ECU2}) est une instruction de puissance (InsP), sélectionner par défaut la deuxième cible de puissance (P_{HP2*}) comme deuxième consigne de puissance (P_{HP*}) et pour sélectionner la première cible de puissance (P_{HP1*}) comme deuxième consigne de puissance (P_{HP*}) en cas de dysfonctionnement de la première voie d'alimentation (V1),
∘ Une unité de traitement (22) configurée pour déterminer la deuxième consigne de paramétrage (P_{CONS2}) pour le deuxième convertisseur (C2) à partir de la deuxième consigne de puissance (P_{HP*}).

2. Système de génération électrique (1) selon la revendication 1, dans lequel l'unité de sélection (14) est configurée pour, si la première consigne de génération (P_{ECU1}) est une instruction de tension (InsV) sélectionner la première cible de puissance (P_{BP1*}) comme première consigne de puissance (P_{BP*}).

3. Système de génération électrique (1) selon l'une des revendications 1 à 2, comprenant au moins une unité de distribution électrique (EDU) alimentée par les convertisseurs (C1, C2) à la tension de distribution (V_{DC}).

4. Système de génération électrique (1) selon la revendication 3, dans lequel le bloc de commande (20) appartient à l'unité de distribution électrique (EDU).

5. Système de génération électrique (1) selon la revendication 1, dans lequel la première voie de contrôle (VC1) et la deuxième voie de contrôle (VC2) possèdent des unités analogues.

6. Système de génération électrique (1) selon l'une des revendications 1 à 5, comprenant :
- Au moins une troisième voie d'alimentation (V3) comprenant un troisième convertisseur (C3), alimenté par une troisième source électrique (BAT), pour générer une troisième intensité de distribution (I_{DC3}) en fonction de son paramétrage, le troisième convertisseur (C3) générant une troisième puissance (P_{BAT}) qui est fonction de la tension de distribution (V_{DC}),
- Le dispositif de contrôle (2) étant configuré pour déterminer une troisième consigne de paramétrage (P_{BAT}) pour le troisième convertisseur (C3), le dispositif de contrôle (2) comprenant une troisième voie de contrôle (VC3) pour contrôler la troisième voie d'alimentation (V3),
- Le bloc de commande (20) étant configuré, à partir de la consigne générale de génération (P_{ECUC}), pour fournir une troisième consigne de génération (P_{ECU3}) à la troisième voie d'alimentation (V3), une unique consigne de génération étant une instruction de tension (InsV), les autres étant des instructions de puissance (InsP).

7. Système de génération électrique (1) selon la revendication 6, dans lequel l'unité de sélection (14) de la première voie de contrôle (VC1) est configurée pour :
∘ Si la première consigne de génération (P_{ECU1}) est une instruction de puissance (InsP), sélectionner par défaut la deuxième cible de puissance (P_{BP2*}) comme première consigne de puissance (P_{BP*}) et pour sélectionner la première cible de puissance (P_{BP1*}) comme première consigne de puissance (P_{BP*}) en cas de dysfonctionnement de la deuxième voie d'alimentation (V2) ou de la troisième voie d'alimentation (V3).

8. Procédé de génération électrique pour alimenter au moins un réseau électrique d'un aéronef (REA) à partir d'un système de génération électrique (1) selon l'une des revendications 1 à 7, l'aéronef comprenant au moins une turbomachine d'aéronef (T) comprenant un arbre basse pression (BP) et un arbre haute pression (HP) configurés pour être entraînés en rotation, le procédé comportant des étapes consistant à :
- Recevoir une consigne de génération générale (P_{ECUG}) définissant une stratégie d'hybridation,
- A partir de la consigne générale de génération (P_{ECUC}), fournir une première consigne de génération (P_{ECU1}) à la première voie d'alimentation (V1) et une deuxième consigne de génération (P_{ECU2}) à la deuxième voie d'alimentation (V2), l'une de la première consigne de génération (P_{ECU1}) et de la deuxième consigne de génération (P_{ECU2}) étant une instruction de tension (InsV), l'autre étant une instruction de puissance (InsP),
- Déterminer une première cible de puissance (P_{BP1*}) en fonction d'une consigne de tension de distribution (V_{DC*}) et d'une mesure de la tension de distribution (V_{DC}),
- Déterminer une deuxième cible de puissance (P_{BP2*}) à partir de la première consigne de génération (P_{ECU1}),
- Sélectionner par défaut la deuxième cible de puissance (P_{BP2*}) comme première consigne de puissance (P_{BP*}) et sélectionner la première cible de puissance (P_{BP1*}) comme première consigne de puissance (P_{BP*}) en cas de dysfonctionnement de la deuxième voie d'alimentation (V2),
- Déterminer une première consigne de paramétrage (P_{CONS1}) pour le premier convertisseur (C1) à partir de la première consigne de puissance (P_{BP*}).

9. Produit de type programme d'ordinateur, comprenant au moins une séquence d'instructions stockée et lisible par un processeur et qui, une fois lue par ce processeur, provoque la réalisation des étapes du procédé de la revendication 8.

## Patentansprüche

1. Stromerzeugungssystem (1) zur Versorgung mindestens eines Stromnetzes eines Luftfahrzeugs (REA), wobei das Luftfahrzeug mindestens eine Luftfahrzeug-Turbomaschine (T) umfasst, die eine Niederdruckwelle (BP) und eine Hochdruckwelle (HP) umfasst, die konfiguriert sind, um rotatorisch angetrieben zu werden, wobei das Stromerzeugungssystem (1) konfiguriert ist, um einen allgemeinen Erzeugungssollwert (P_{ECUG}) zu empfangen, der eine Hybridisierungsstrategie definiert, wobei das Stromerzeugungssystem (1) umfasst:
- einen ersten Versorgungsweg (V1), der umfasst:
- einen ersten Generator (G1), der konfiguriert ist, um einen Wechselstrom zu empfangen, indem er mechanische Energie von einer von der Niederdruckwelle (BP) und der Hochdruckwelle (HP) entnimmt,
- einen ersten Umrichter (C1), der dem ersten Generator (G1) zugeordnet ist, um den erzeugten Wechselstrom entsprechend seiner Einstellung in eine erste Verteilungsstromstärke (I_{DC1}) umzuwandeln, wobei der erste Umrichter (C1) eine erste Leistung (P_{BP}) erzeugt, die von einer Verteilungsspannung (V_{DC}) abhängt,
- einen zweiten Versorgungsweg (V2), der umfasst:
- einen zweiten Generator (G2), der konfiguriert ist, um einen Wechselstrom zu empfangen, indem er mechanische Energie von der jeweils anderen von der Niederdruckwelle (BP) und der Hochdruckwelle (HP) entnimmt,
- einen zweiten Umrichter (C2), der dem zweiten Generator (G2) zugeordnet ist, um den erzeugten Wechselstrom entsprechend seiner Einstellung in eine zweite Verteilungsstromstärke (I_{DC2}) umzuwandeln, wobei der zweite Umrichter (C2) eine zweite Leistung (P_{HP}) erzeugt, die von der Verteilungsspannung (V_{DC}) abhängt,
- eine Steuervorrichtung (2), die konfiguriert ist, um einen ersten Einstellsollwert (P_{CONS1}) für den ersten Umrichter (C1) und einen zweiten Einstellsollwert (P_{CONS2}) für den zweiten Umrichter (C2) zu bestimmen, wobei die Steuervorrichtung (2) **dadurch gekennzeichnet ist, dass** sie umfasst:
- einen Steuerblock (20), der konfiguriert ist, um ausgehend von dem allgemeinen Erzeugungssollwert (P_{ECUG}) einen ersten Erzeugungssollwert (P_{ECU1}) an den ersten Versorgungsweg (V1) und einen zweiten Erzeugungssollwert (P_{ECU2}) an den zweiten Versorgungsweg (V2) zu liefern, wobei entweder der erste Erzeugungssollwert (P_{ECU1}) oder der zweite Erzeugungssollwert (P_{ECU2}) ein Spannungsbefehl (InsV) ist, wobei der andere ein Leistungsbefehl (InsP) ist,
- einen ersten Steuerweg (VC1) zur Steuerung des ersten Versorgungswegs (V1), der umfasst:
∘ eine Regeleinheit (11), die konfiguriert ist, um ein erstes Leistungsziel (P_{BP1*}) in Abhängigkeit von einem Verteilungsspannungssollwert (V_{DC*}) und einer Messung der Verteilungsspannung (V_{DC}) zu bestimmen,
∘ eine Hybridisierungseinheit (13), die konfiguriert ist, um ein zweites Leistungsziel (P_{BP2*}) ausgehend von dem ersten Erzeugungssollwert (P_{ECU1}) zu bestimmen,
∘ eine Auswahleinheit (14), die konfiguriert ist, um, falls der erste Erzeugungssollwert (P_{ECU1}) ein Leistungsbefehl (InsP) ist,
▪ standardmäßig das zweite Leistungsziel (P_{BP2*}) als ersten Leistungssollwert (P_{BP*}) auszuwählen und
▪ das erste Leistungsziel (P_{BP1*}) als ersten Leistungssollwert (P_{BP*}) auszuwählen, falls der zweite Versorgungsweg (V2) ausfällt,
∘ eine Verarbeitungseinheit (12), die konfiguriert ist, um den ersten Einstellsollwert (P_{CONS1}) für den ersten Umrichter (C1) ausgehend von dem ersten Leistungssollwert (P_{BP*}) bestimmt,
- einen zweiten Steuerweg (VC2) zur Steuerung des zweiten Versorgungswegs (V2), der umfasst:
∘ eine Regeleinheit (21), die konfiguriert ist, um ein erstes Leistungsziel (P_{HP1*}) in Abhängigkeit von einem Verteilungsspannungssollwert (V_{DC*}) und einer Messung der Verteilungsspannung (V_{DC}) zu bestimmen,
∘ eine Hybridisierungseinheit (23), die konfiguriert ist, um ein zweites Leistungsziel (P_{BP2*}) ausgehend von dem zweiten Erzeugungssollwert (P_{ECU2}) zu bestimmen,
∘ eine Auswahleinheit (24), die konfiguriert ist, um:
▪ falls der zweite Erzeugungssollwert (P_{ECU2}) ein Spannungsbefehl (InsV) ist, das erste Leistungsziel (P_{HP1*}) als zweiten Leistungssollwert (P_{HP*}) auszuwählen und
▪ falls der zweite Erzeugungssollwert (P_{ECU2}) ein Leistungsbefehl (InsP) ist, standardmäßig das zweite Leistungsziel (P_{HP2*}) als zweiten Leistungssollwert (P_{HP*}) auszuwählen und um das erste Leistungsziel (P_{HP1*}) als zweiten Leistungssollwert (P_{HP*}) auszuwählen, falls der erste Versorgungsweg (V1) ausfällt,
∘ eine Verarbeitungseinheit (22), die konfiguriert ist, um den zweiten Einstellsollwert (P_{CONS2}) für den zweiten Umrichter (C2) ausgehend von dem zweiten Leistungssollwert (P_{HP*}) bestimmt.

2. Stromerzeugungssystem (1) nach Anspruch 1, wobei die Auswahleinheit (14) konfiguriert ist, um, wenn der erste Erzeugungssollwert (P_{ECU1}) ein Spannungsbefehl (InsV) ist, das erste Leistungsziel (P_{BP1*}) als ersten Leistungssollwert (P_{BP*}) auszuwählen.

3. Stromerzeugungssystem (1) nach einem der Ansprüche 1 bis 2, umfassend mindestens eine Stromverteilungseinheit (EDU), die von den Umrichtern (C1, C2) mit der Verteilungsspannung (V_{DC}) versorgt wird.

4. Stromerzeugungssystem (1) nach Anspruch 3, wobei der Steuerblock (20) zu der Stromverteilungseinheit (EDU) gehört.

5. Stromerzeugungssystem (1) nach Anspruch 1, wobei der erste Steuerweg (VC1) und der zweite Steuerweg (VC2) analoge Einheiten besitzen.

6. Stromerzeugungssystem (1) nach einem der Ansprüche 1 bis 5, umfassend:
- mindestens einen dritten Versorgungsweg (V3), der einen dritten Umrichter (C3) umfasst, der von einer dritten Stromquelle (BAT) versorgt wird, um einen dritten Verteilungsstrom (I_{DC3}) in Abhängigkeit von seiner Einstellung zu erzeugen, wobei der dritte Umrichter (C3) eine dritte Leistung (P_{BAT}) erzeugt, die von der Verteilungsspannung (V_{DC}) abhängt,
- wobei die Steuervorrichtung (2) konfiguriert ist, um einen dritten Einstellsollwert (P_{BAT}) für den dritten Umrichter (C3) zu bestimmen, wobei die Steuervorrichtung (2) einen dritten Steuerweg (VC3) zur Steuerung des dritten Versorgungswegs (V3) umfasst,
- wobei der Steuerblock (20) konfiguriert ist, um ausgehend von dem allgemeinen Erzeugungssollwert (P_{ECUG}) einen dritten Erzeugungssollwert (P_{ECU3}) an den dritten Versorgungsweg (V3) zu liefern, wobei ein einziger Erzeugungssollwert ein Spannungsbefehl (InsV) ist, wobei die anderen Leistungsbefehle (InsP) sind.

7. Stromerzeugungssystem (1) nach Anspruch 6, wobei die Auswahleinheit (14) des ersten Steuerwegs (VC1) konfiguriert ist, um:
∘ wenn der erste Erzeugungssollwert (P_{ECU1}) ein Leistungsbefehl (InsP) ist, standardmäßig das zweite Leistungsziel (P_{BP2*}) als ersten Leistungssollwert (P_{BP*}) auszuwählen und um das erste Leistungsziel (P_{BP1*}) als ersten Leistungssollwert (P_{BP*}) auszuwählen, falls der zweite Versorgungsweg (V2) oder der dritte Versorgungsweg (V3) ausfällt.

8. Verfahren zur Stromerzeugung zur Versorgung mindestens eines Stromnetzes eines Luftfahrzeugs (REA) ausgehend von einem Stromerzeugungssystem (1) nach einem der Ansprüche 1 bis 7, wobei das Luftfahrzeug mindestens eine Luftfahrzeug-Turbomaschine (T) umfasst, die eine Niederdruckwelle (BP) und eine Hochdruckwelle (HP) umfasst, die konfiguriert sind, um rotatorisch angetrieben zu werden, wobei das Verfahren die folgenden Schritte umfasst:
- Empfangen eines allgemeinen Erzeugungssollwerts (P_{ECUG}), der eine Hybridisierungsstrategie definiert,
- Liefern, ausgehend von dem allgemeinen Erzeugungssollwert (P_{ECUG}), eines ersten Erzeugungssollwerts (P_{ECU1}) für den ersten Versorgungsweg (V1) und eines zweiten Erzeugungssollwerts (P_{ECU2}) für den zweiten Versorgungsweg (V2), wobei einer von dem ersten Erzeugungssollwert (P_{ECU1}) und von dem zweiten Erzeugungssollwert (P_{ECU2}) ein Spannungsbefehl (InsV) ist, wobei der andere ein Leistungsbefehl (InsP) ist,
- Bestimmen eines ersten Leistungsziels (P_{BP1*}) in Abhängigkeit von einem Verteilerspannungssollwert (V_{DC*}) und einer Messung der Verteilerspannung (V_{DC}),
- Bestimmen eines zweiten Leistungsziels (P_{BP2*}) ausgehend von dem ersten Erzeugungssollwert (P_{ECU1}),
- Auswählen, standardmäßig, des zweiten Leistungsziels (P_{BP2*}) als ersten Leistungssollwert (P_{BP*}) und Auswählen des ersten Leistungsziels (P_{BP1*}) als ersten Leistungssollwert (P_{BP*}), falls der zweite Versorgungsweg (V2) ausfällt,
- Bestimmen eines ersten Einstellsollwerts (P_{CONS1}) für den ersten Umrichter (C1) ausgehend von dem ersten Leistungssollwert (P_{BP*}).

9. Produkt vom Typ Computerprogramm, das mindestens eine gespeicherte und von einem Prozessor lesbare Befehlssequenz umfasst, die, sobald sie von diesem Prozessor gelesen wird, die Durchführung der Verfahrensschritte nach Anspruch 8 bewirkt.

## Claims

1. An electrical generation system (1) for supplying at least one electrical network of an aircraft (REA), the aircraft comprising at least one aircraft turbomachine (T) comprising a low-pressure shaft (BP) and a high-pressure shaft (HP) configured to be driven in rotation, the electrical generation system (1) being configured to receive a general generation setting (P_{ECUG}) defining a hybridization strategy, the electrical generation system (1) comprising:
• A first supply path (V1) comprising:
• A first generator (G1) configured to generate an alternating current by drawing mechanical energy from one of the low pressure (BP) and high pressure (HP) shafts.
• A first converter (C1), associated with the first generator (G1), for converting the alternating current generated into a first distribution current (I_{DC1}) as a function of its parameterization, the first converter (C1) generating a first power (P_{BP}) which is a function of a distribution voltage (V_{DC}),
• A second supply path (V2) comprising:
• A second generator (G2) configured to generate an alternating current by drawing mechanical energy from the other of the low-pressure (BP) and high-pressure (HP) shafts,
• A second converter (C2), associated with the second generator (G2), for converting the alternating current generated into a second distribution current (I_{DC2}) as a function of its parameterization, the second converter (C2) generating a second power (P_{HP}) which is a function of the distribution voltage (V_{DC}),
• A control device (2) configured to determine a first parameterization setting (P_{CONS1}) for the first converter (C1) and a second parameterization setting (P_{CONS2}) for the second converter (C2), the control device (2) being **characterized in that** it comprises:
• A control block (20) configured, on the basis of the general generation setting (P_{ECUG}), to supply a first generation setting (P_{ECU1}) to the first supply path (V1) and a second generation setting (P_{ECU2}) to the second supply path (V2), one of the first generation setting (P_{ECU1}) and the second generation setting (P_{ECU2}) being a voltage instruction (InsV), the other being a power instruction (InsP),
• A first control path (VC1) for controlling the first supply path (V1) which comprises:
▪ A regulation unit (11) configured to determine a first power target (P_{BP1*}) as a function of a distribution voltage setting (V_{DC*}) and a measure of the distribution voltage (V_{DC}),
▪ A hybridization unit (13) configured to determine a second power target (P_{BP2*}) from the first generation setting (P_{ECU1}),
▪ A selection unit (14) configured to, whether the first generation setting (P_{ECU1}) is a power instruction (InsP),
▪ Select by default the second power target (P_{BP2*}) as the first power setting (P_{BP*}) and
▪ Select the first power target (P_{BP1*}) as the first power setting (P_{BP*}) in case of a malfunction of the second supply path (V2),
▪ A processing unit (12) configured to determine the first parameterization setting (P_{CONS1}) for the first converter (C1) from the first power setting (P_{BP*}),
• A second control path (VC2) for controlling the second supply path (V2) comprising:
▪ A regulation unit (21) configured to determine a first power target (P_{HP1*}) as a function of a distribution voltage setting (V_{DC*}) and a measurement of the distribution voltage (V_{DC}),
▪ A hybridization unit (23) configured to determine a second power target (P_{HP2*}) from the second generation setting (P_{ECU2}),
▪ A selection unit (24) configured to:
▪ If the second generation setting (P_{ECU2}) is a voltage instruction (InsV), select the first power target (P_{HP1*}) as the second power setting (P_{HP*}).
▪ If the second generation setting (P_{ECU2}) is a power instruction (InsP), select by default the second power target (P_{HP2*}) as the second power setting (P_{HP*}) and select the first power target (P_{HP1*}) as the second power setting (P_{HP*}) in the event of a malfunction of the first supply path (V1),
▪ A processing unit (22) configured to determine the second parameterization setting (P_{CONS2}) for the second converter (C2) from the second power setting (P_{HP*}).

2. The electrical generation system (1) according to claim 1, wherein the selection unit (14) is configured to, if the first generation setting (P_{ECU1}) is a voltage instruction (InsV), select the first power target (P_{BP1*}) as the first power setting (P_{BP*}).

3. The electrical generation system (1) according to one of claims 1 to 2, comprising at least one electrical distribution unit (EDU) supplied by the converters (C1, C2) at the distribution voltage (V_{DC}).

4. The electrical generation system (1) according to claim 3, wherein the control block (20) belongs to the electrical distribution unit (EDU).

5. The electrical generation system (1) according to claim 5, wherein the first control path (VC1) and the second control path (VC2) have similar units.

6. An electrical generation system (1) according to one of claims 1 to 5, comprising:
• At least one third supply path (V3) comprising a third converter (C3), supplied by a third electrical source (BAT), for generating a third distribution current (I_{DC3}) as a function of its parameterization, the third converter (C3) generating a third power (P_{BAT}) which is a function of the distribution voltage (V_{DC}),
• The control device (2) being configured to determine a third parameterization setting (P_{BAT}) for the third converter (C3), the control device (2) comprising a third control path (VC3) for controlling the third supply path (V3).
• The control block (20) being configured, on the basis of the generation general setting (P_{ECUG}), to supply a third generation setting (P_{ECU3}) to the third supply path (V3), a single generation setting being a voltage instruction (InsV), the others being power instructions (InsP).

7. The electrical generation system (1) according to claim 6, wherein the selection unit (14) of the first control path (VC1) is configured to:
• If the first generation setting (P_{ECU1}) is a power instruction (InsP), select by default the second power target (P_{BP2*}) as the first power setting (P_{BP*}) and select the first power target (P_{BP1*}) as the first power setting (P_{BP*}) in case of a malfunction of the second supply path (V2) or the third supply path (V3).

8. An electrical generation method for supplying at least one electrical network of an aircraft (REA) from an electrical generation system (1) according to one of claims 1 to 7, the aircraft comprising at least one aircraft turbomachine (T) comprising a low-pressure shaft (BP) and a high-pressure shaft (HP) configured to be driven in rotation, the method comprising steps consisting of:
• Receiving a general generation setting (P_{ECUG}) defining a hybridization strategy,
• From the general generation setting (P_{ECUG}), supplying a first generation setting (P_{ECU1}) to the first supply path (V1) and a second generation setting (P_{ECU2}) to the second supply path (V2), one of the first generation setting (P_{ECU1}) and the second generation setting (P_{ECU2}) being a voltage instruction (InsV), the other being a power instruction (InsP),
• Determining a first power target (P_{BP1*}) as a function of a distribution voltage setting (V_{DC*}) and a measurement of the distribution voltage (V_{DC}),
• Determining a second power target (P_{BP2*}) from the first generation setting (P_{ECU1}),
• Selecting by default the second power target (P_{BP2*}) as the first power setting (P_{BP*}) and selecting the first power target (P_{BP1*}) as the first power setting (P_{BP*}) in case of a malfunction of the second supply path (V2).
• Determining a first parameterization setting (P_{CONS1}) for the first converter (C1) from the first power setting (P_{BP*}).

9. A product of the computer program type, comprising at least one sequence of instructions stored and readable by a processor and which, when read by this processor, causes the steps of the method of claim 8 to be carried out.
